# EUROPEAN PATENT SPECIFICATION

(11) **EP 1 536 151 B1**
(45) Date of publication and mention of the grant of the patent: **13.09.2006**
(21) Application number: 04105900.7
(22) Date of filing: 18.11.2004
(51) Int. Cl.: F16B 39/04, F16B 39/12

(54) **A locking nut**
Sicherungsmutter
Ecrou de blocage

(30) Priority: 28.11.2003 SE 0303191
(43) Date of publication of application: 01.06.2005
(73) Proprietor: Aktiebolaget SKF, 415 50 Göteborg (SE)
(72) Inventor: Axelsson, Uno, 641 35, Katrineholm (SE); Olsson, Henrik, 641 45, Katrineholm (SE)
(74) Representative: Westman, Per Börje Ingemar

(56) References cited:
- EP-A- 0 336 140
- GB-A- 473 545
- US-A- 4 645 395
- US-A- 5 454 674

## Description

The present invention refers to a locking nut having an internal thread intended to be screwed up on a thread on a shaft and having a locking element, which by means of at least one screw member can be pressed against the thread in the shaft, thereby locking the nut against unintentional unlocking.

A locking nut of this kind is earlier known from for instance, SE-435 417 C. The locking nut according to that patent had a number of internal recesses opening in the inner envelope surface of the nut and each one of which recesses was equipped with a locking element tightened by a screw. Each recess is formed with tapering wall portions and the locking elements are formed in correspondence therewith and being elastically deformable, thus that they by the resiliency were intended to move outwards from their locking positions, when the screws were loosened.

However when using large such locking nuts, e.g. for spindles of wind turbines, it has turned out that the counter-force obtained by the resiliency of the locking elements when the screws are loosened is insufficient for moving the locking elements out of their locking positions, and the locking nut will not be disengaged from the shaft.

The purpose of the present invention is to provide a locking nut of the type defined in the preamble of the accompanying claim 1, which is designed to give a reliable and safe locking effect and which can be readily un-locked in spite of the fact that it in its locking position can be subjected to very large forces, and this is obtained in that the locking nut according to the present invention has been designed as defined in the characterizing part of the accompanying claim 1.

Hereinafter the locking nut according to the present invention will be further described with reference to the accompanying drawings.
Fig. 1 shows a side view of a locking nut according to the present invention,
Fig. 2 is a cross sectional view through the locking nut according to Fig. 1 as seen along the line II-II therein,
Fig. 3 is a portion of the cross section of Fig. 2 in larger scale.

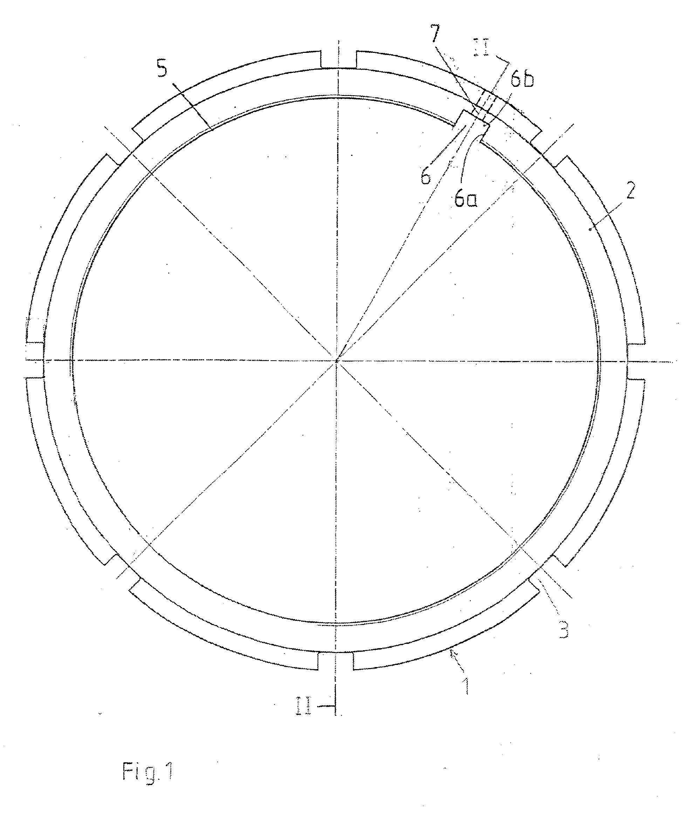

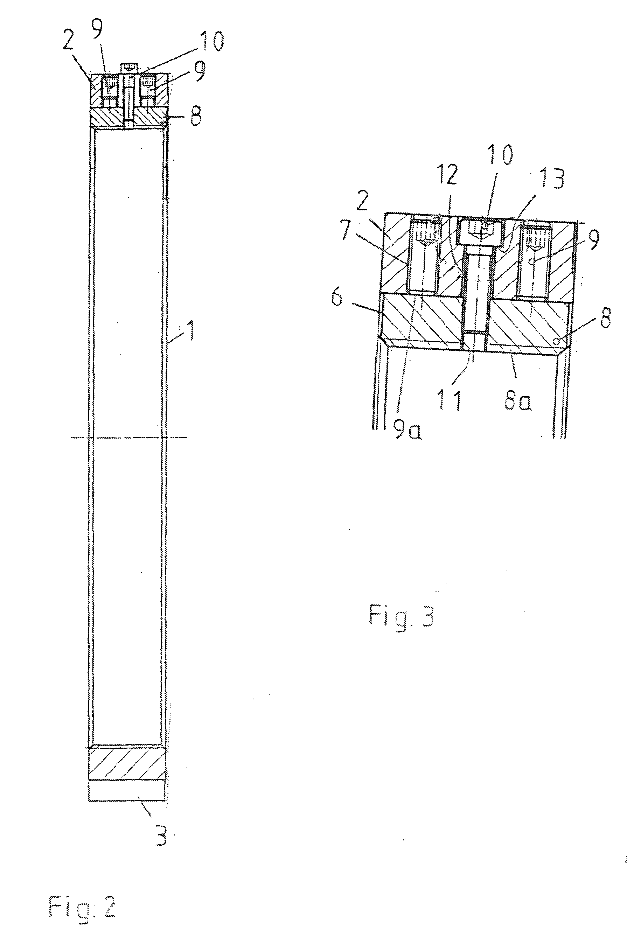

In Fig. 1 is shown in a side view a locking nut 1 according to the invention. The locking nut incorporates a ring member 2, which at its outer envelope surface is provided with a number of recesses 3 intended to cooperate with a hook spanner or an impact spanner by which the nut is screwed on the threads in a not shown shaft. The bore of the ring member 2 is provided with an internal thread, intimated at 5, and intended to cooperate with a corresponding thread on the not shown shaft. Along the internal envelope surface of the ring member 2 is provided a recess 6, which is opening inwardly. This inner recess 6 extends along a short length of the envelope surface, in the embodiment shown about 7-8°, and it is limited by straight side walls 6a and a bottom wall 6b perpendicular to the side walls. Radial bores are provided through the ring member 2 thus that they will open into the bottom wall 6b of the inner recess 6. In Fig. 1 only one such bore 7 is visible, but as can be seen in Figs. 2 and 3 there are more bores arranged preferably along a straight axial line.

Fig. 2 shows a section of the locking nut 1 along line II-II in Fig. 1. In this view there has been inserted a locking insert 8 positioned in the inner recess 6 and in the embodiment shown two locking screws 9 extending through the bores 7 in the ring member 2, and one release screw 10.

Fig. 3 shows a portion of the view according to Fig. 2 in bigger scale. From this can be seen the locking insert 8, which has a shape being a complement of the inner recess 6 in the ring member 2. The locking insert 8 has an inner edge 8a intended to cooperate with the threads of the not shown shaft for locking the nut on the shaft. The locking insert 8 is further provided with a threaded through-bore 11. This threaded through-bore 11 is situated to correspond regarding position and direction with a smooth bore 12 having a shoulder 13, and extending through the ring member 2. The release screw 10 is arranged to extend through the bore 12, and to engage with a head against the shoulder 13, and it is arranged to be in threaded engagement with the bore 11 in the locking insert 8.

When the locking nut 1 shall be locked to a shaft it is first positioned around the shaft in a desired position, e.g by being screwed up thereon. At this moment the screw 10 has earlier been positioned in the bore 12 and tightened so much in the threaded bore 11 in the locking insert 8 that the locking insert will be safely kept in its recess 6. When the locking nut thus has reached the desired position, the release screw 10 is loosened and thereupon the set screws 9 in the threaded bores 7 are tightened, whereby their end faces 9a will exert a pressure on the locking insert 8, which thereby will press its edge 8a against the threads on the shaft hereby causing a firm grip between locking nut and shaft. Thereupon the release screw 10 is tightened sufficiently to prevent the locking insert 8 from coming loose due to vibrations during operation of the device in which the shaft is incorporated.

When the locking nut 1 shall be dismounted, the screws 9 are loosened or unscrewed from their bores 7, thereby terminating their pushing force upon the locking insert 8. Particularly for large locking nuts, the grip against the shaft is not always relieved, due to insufficient resiliency in the locking insert 8 and in the ring member 4, i.e. the grip will remain in spite of the fact that the screws 9 are removed.

For effecting a release of the locking nut 1 from the shaft at such a situation, the release screw 10 is then screwed in further. As the release screw is not in thread engagement with the smooth part 12 of its bore but in thread engagement against the threads in the bore 11 of the locking insert 8, tightening of the release screw 10 will subject the locking insert 8 to a "pulling" force, causing the locking insert 8 to be raised from the shaft and thereby to relieve its grip.

The invention is not limited to the arrangement illustrated and described, but modifications and variants are possible within the scope of the accompanying claims. Thus although the schematic drawing figures have illustrated a locking nut having a single locking insert tightened by means of two screws and released by means of one release screw it is evident that the locking nut can have more than one recess 6, which recesses are then preferably evenly spaced around the circumference of the locking nut ring member 2, and each recess having its own locking insert. Furthermore the number of screws can be altered, although it is desirable with a small number of locking and release screws. The shape of the recess 6 and the complimentary locking insert have been shown as substantially parallel-epipedic, but there are of course also other shapes, which can give a corresponding result.

## Claims

1. A locking nut (1) having an internal thread (5) intended to be screwed up on a thread on a shaft and having at least one locking element (8), which by means of at least one locking screw (9) can be pressed with a locking part (8a) thereof, against the thread in the shaft, thereby locking the nut against unintentional unlocking,
**characterized** therein,
that each locking element (8) is provided with a releasing means incorporating at least one screw (10) arranged to be in threaded engagement with the locking element (8) for subjecting the locking element (8) to a radial pulling force causing the locking element (8) to be lifted from engagement with the shaft thread after loosening of the locking screws (9).

2. A locking nut (1) as claimed in claim 1,
**characterized** therein,
that the locking element (8) is provided in an inner recess (6) in the inner envelope surface of the locking nut, and that the locking screws (9) and the at least one release screw (10) are arranged to extend through radial bores (7, 12) in the locking nut (1) positioned to coincide with the inner recess (6) of the locking nut.

3. A locking nut (1) as claimed in claim 1 or 2,
**characterized** therein,
that the release screw (10) is arranged to extend through a smooth radial bore (12) in the locking nut, and to be in threaded engagement with a threaded bore (11) provided in the locking element and coinciding to position and direction with the smooth radial bore in the locking nut (1), the smooth radial bore (12) in the locking nut (1) having means (13) limiting the distance the release screw (10) can be screwed into the radial bore (12) in the locking nut.

4. A locking nut as claimed in claim 3,
**characterized** therein,
that the means (13) limiting the distance the release screw (10) can be screwed into the radial bore is a shoulder cooperating with a head of the screw (10).

5. A locking nut (1) as claimed in anyone of the preceding claims,
**characterized** therein,
that the locking screws (9) are set screws inserted in threaded engagement with threaded bores (7) in the locking nut (1) and arranged to engage with their end faces (9a) radially inwardly on the surface of the locking element (8) facing away from its locking part (8a).

6. A locking nut (1) as claimed in anyone of the preceding claims,
**characterized** therein,
that the external envelope surface of the locking nut (1) is provided with recesses (3) acting as key grips for a tool for screwing up the locking nut on a shaft.

## Patentansprüche

1. Sicherungsmutter (1) mit einem Innengewinde (5), das zum Aufschrauben auf ein Gewinde auf einer Welle vorgesehen ist und wenigstens ein Sicherungselement (8) aufweist, das mittels wenigstens einer Sicherungsschraube (9) mit einem Sicherungsteil (8a) von ihm gegen das Gewinde der Welle drückbar ist und **dadurch** die Mutter gegen unbeabsichtigtes Lösen verriegelt, **dadurch gekennzeichnet, daß** jedes Sicherungselement (8) mit Freigabemitteln versehen ist, die wenigstens eine Schraube (10) umfassen, die im Gewindeeingriff mit dem Sicherungselement (8) angeordnet ist, um auf das Sicherungselement (8) eine radiale Zugkraft auszuüben, die dafür sorgt, daß sich das Sicherungselement (8) nach dem Lösen der Sicherungsschrauben (9) aus dem Eingriff mit dem Wellengewinde anhebt.

2. Sicherungsmutter (1) nach Anspruch 1, **dadurch gekennzeichnet, daß** das Sicherungselement (8) in einer inneren Ausnehmung (6) in der inneren Hüllfläche der Sicherungsmutter vorgesehen ist und daß die Sicherungsschrauben (9) und die wenigstens eine Löseschraube (10) derart angeordnet sind, daß sie sich durch Radialbohrungen (7, 12) in der Sicherungsmutter (1) erstrecken, die zum Zusammenfallen mit der inneren Ausnehmung (6) der Sicherungsmutter angeordnet sind.

3. Sicherungsmutter (1) nach Anspruch 1 oder 2, **dadurch gekennzeichnet, daß** die Löseschraube (10) derart angeordnet ist, daß sie sich durch eine glattwandige Radialbohrung (12) in der Sicherungsmutter erstreckt und sich im Gewindeingriff mit einer Gewindebohrung (11) befindet, die in dem Sicherungselement vorgesehen ist und in Lage und Ausrichtung mit der glattwandigen Radialbohrung in der Sicherungsmutter (1) zusammenfällt, wobei die glattwandige Radialbohrung (12) in der Sicherungsmutter (1) Mittel (13) zum Begrenzen der Distanz aufweist, um welche die Löseschraube (10) in die Radialbohrung (12) in der Sicherungsmutter einschraubbar ist.

4. Sicherungsmutter (1) nach Anspruch 3, **dadurch gekennzeichnet, daß** die Mittel (13) zum Begrenzen der Distanz, um welche die Löseschraube (10) in die Radialbohrung einschraubbar ist, aus einem Absatz bestehen, der mit einem Kopf der Schraube (10) zusammenwirkt.

5. Sicherungsmutter (1) nach einem der vorhergehenden Ansprüche, **dadurch gekennzeichnet, daß** die Sicherungsschrauben (9) Stellschrauben sind, die im Gewindeeingriff mit Gewindebohrungen (7) in der Sicherungsmutter (1) eingefügt und derart angeordnet sind, daß sie mit ihren radial innenliegenden Stirnflächen (9a) an der Oberfläche des Sicherungselements (8) anliegen, die von dessen Sicherungsteil (8a) abgewandt ist.

6. Sicherungsmutter (1) nach einem der vorhergehenden Ansprüche, **dadurch gekennzeichnet, daß** die äußere Hüllfläche der Sicherungsmutter (1) mit Ausnehmungen (3) versehen ist, die als Schlüsselansätze für ein Werkzeug zum Aufschrauben der Sicherungsmutter auf eine Welle dienen.

## Revendications

1. Ecrou de blocage (1) ayant un filet intérieur (5), conçu pour être vissé sur un filet sur un arbre et ayant au moins un élément de blocage (8), qui peut être pressé, au moyen d'au moins une vis de blocage (9), avec une partie de blocage (8a) de celle-ci, contre le filet dans l'arbre, bloquant par ce moyen l'écrou contre un déblocage non intentionnel, **caractérisé en ce que** chaque élément de blocage (8) est muni d'un moyen de libération, englobant au moins une vis (10), agencée pour être en prise filetée avec l'élément de blocage (8) pour soumettre l'élément de blocage (8) à une force de traction radiale, amenant l'élément de blocage (8) à être relevé de la prise avec le filet de l'arbre, après desserrage des vis de blocage (9).

2. Ecrou de blocage (1) selon la revendication 1, **caractérisé en ce que** l'élément de blocage (8) est muni d'un évidement intérieur (6) dans la surface d'enveloppe intérieure de l'écrou de blocage et que les vis de blocage (9) et la au moins une vis de libération (10) sont agencées pour s'étendre dans des trous radiaux (7, 12) dans l'écrou de blocage (1), positionnés pour coïncider avec l'évidement intérieur (6) de l'écrou de blocage.

3. Ecrou de blocage (1) selon la revendication 1 ou 2, **caractérisé en ce que** la vis de libération (10) est agencée pour s'étendre dans un trou radial lisse (12) dans l'écrou de blocage et pour être en prise filetée avec un alésage fileté (11), prévu dans l'élément de blocage et coïncidant, en ce qui concerne la position et la direction, avec le trou radial lisse dans l'écrou de blocage (1), le trou radial lisse (12) dans l'écrou de blocage (1) ayant un moyen (13) qui limite la distance sur laquelle la vis de libération (10) peut être vissée dans le trou radial (12) dans l'écrou de blocage.

4. Ecrou de blocage (1) selon la revendication 3, **caractérisé en ce que** le moyen (13), qui limite la distance sur laquelle la vis de libération (10) peut être vissée dans le trou radial, est un épaulement, qui coopère avec une tête de la vis (10).

5. Ecrou de blocage (1) selon l'une quelconque des revendications précédentes, **caractérisé en ce que** les vis de blocage (9) sont des vis de pression, insérées en prise filetée avec des alésages filetés (7) dans l'écrou de blocage (1) et agencées pour se mettre en prise avec leurs faces d'extrémité (9a), radialement à l'intérieur, sur la surface de l'élément de blocage (8), faisant face à l'écart de sa partie de blocage (8a).

6. Ecrou de blocage (1) selon l'une quelconque des revendications précédentes, **caractérisé en ce que** la surface d'enveloppe externe de l'écrou de blocage (1) est munie d'évidements (3), agissant comme des préhensions clés pour un outil, permettant de visser l'écrou de blocage sur un arbre.
